# EUROPEAN PATENT APPLICATION

(11) **EP 4 279 534 A1**
(43) Date of publication of application: **22.11.2023**
(21) Application number: 22461551.8
(22) Date of filing: 20.05.2022
(51) Int. Cl.: C08G 65/26, C08G 18/48

(54) **A METHOD FOR PRODUCING LOW UNSATURATION LEVEL OXYALKYLATES, AN OXYALKYLATE, A USE THEREOF AND A POLYURETHANE FOAM**

(71) Applicant: PCC ROKITA Spolka Akcyjna, 56-120 Brzeg Dolny (PL)
(72) Inventor: PLOCIENIAC, Miroslaw, 51-531 Wroclaw (PL); SALASA, Michal, 56-120 Brzeg Dolny (PL); MAKULA, Lukasz, 51-114 Wroclaw (PL); BARTNICKI, Lukasz, 51-114 Wroclaw (PL); WOJDYLA, Henryk, 56-100 Wolow (PL)
(74) Representative: Augustyniak, Magdalena Anna

(57) **Abstract**

A method for producing low unsaturation level oxyalkylates, characterised in that it comprises the steps of:
a. preparation of an initial feed containing the first starter and a double metal cyanide type (DMC) catalyst, wherein the initial feed is dried and heated to a reaction temperature from 115 to 145 °C;
b. activation of the DMC catalyst by dosing to the initial feed an alkylene oxide or alkylene oxides mixture in an amount from 5 to 20% by weight of the initial feed;
c. polyaddition of alkylene oxide or alkylene oxides mixture to a first starter in the presence of an activated DMC catalyst, wherein a low molecular weight second starter with a functionality lower than the first starter is simultaneously dosed together with the alkylene oxide stream or alkylene oxides mixture; wherein under the reaction conditions the polyaddition of the alkylene oxide or alkylene oxides mixture occurs simultaneously to the first starter from the initial feed and to the low molecular weight second starter;
d. heating the mixture of oxyalkylates at reaction temperature until constant pressure is achieved, and subsequently conducting degassing process to remove volatiles.

## Description

The invention relates to a method for producing low unsaturation level oxyalkylates, an oxyalkylate, a use thereof and a polyurethane foam. The invention relates to the field of plastics with improved olfactory properties.
The invention is applicable to the producing of polyurethanes, polyurethane-ureas, polyureas, hybrid plastics and other plastics with improved olfactory properties, preferably flexible polyurethane foams.

Chemically speaking, oxyalkylates are products of an oxyalkylation reaction, i.e. the addition of alkylene oxides to various compounds containing an active hydrogen atom, such as mono- and polyfunctional alcohols, amines, or thiols. The reaction can involve the use of various catalysts. Oxyalkylation that results in the formation of macromolecular, oligomeric compounds is of greatest practical importance.

During the production of oxyalkylates (including polyether polyols) in the presence of KOH catalyst occurs the formation of some amount of low molecular weight monols containing an allyl moiety. The allyl alcohol formed as a result of propylene oxide rearrangement undergoes an oxyalkylation reaction same as higher functionality starters, which also results in oxyalkylate formation. Oxyalkylates of alcohols comprising a double bond are generally defined as polyol unsaturation. These compounds are responsible for olfactory properties of both oxyalkylates themselves (including polyether polyols) as well as in foams produced from these oxyalkylates. At the same time, these compounds reduce the overall oxyalkylate functionality, since they are characterized by a functionality equal of 1 (monol), while the main polyol component (oxyalkylate) has a functionality from 3 to 6. The overall oxyalkylate functionality, in turn, is a result of weighted average of all components having OH groups.

Upon completion of the oxyalkylation process in the presence of KOH catalyst, the oxyalkylates obtained are purified by neutralisation with an acidic agent followed by filtration of the precipitated salts. In the process of purification of oxyalkylates, during the step of acidification with an acidic agent, part of the unsaturation (low molecular weight oxyalkylates containing double bonds) undergo hydrolysis reaction with release of propionic aldehyde and low molecular weight oxyalkylate with functionality of 2 (diol).

In turn during the formation of oxyalkylates (including polyether polyols) in the presence of a DMC catalyst (double metal cyanide - double metal cyanide type catalyst), the rearrangement of propylene oxide to allyl alcohol is minimised, by what the amount of obtained low molecular weight oxyalkylates containing a double bond (unsaturation level) is lower by several orders. One of the advantages of the process using the DMC catalyst is that there is no need to purify the obtained polyether polyols. Therefore, there is no formation of low molecular weight diols, that would be formed as a result of hydrolysis of unsaturated monols.

The low molecular weight monols and diols, described above, are an inherent addition to all oxyalkylates produced in the presence of KOH catalyst. The production practice aims at minimising their presence, since the unsaturation level in oxyalkylates is not desired due to olfactory properties. Nevertheless, constant presence of such compounds in oxyalkylates results that foams formulations take account of their presence. Foams formulations are optimised for the presence of these components, and their elimination usually leads to a disruption in the foaming process, potential escape outside the process window, foam destabilisation, relapse or shrinkage and, in the worst case scenario, complete collapse of the foam block. The effect as above is of particular importance when it comes to the formulation of flexible foams with increased sensitivity to organometallic catalysts. Therefore, in certain foam formulations, it is impossible to directly replace KOH catalyst-based oxyalkylates with DMC catalyst-based oxyalkylates. It becomes necessary to modify the foam formulation. Therefore, it is also impossible to mix polyols produced by KOH technology with analogous oxyalkylates produced by DMC technology, despite the compatibility of physicochemical parameters. In the production practice it imposed that the separate tanks for the two types of polyols need to be used, which is economically disadvantageous.

Therefore, there is a need to find a solution that would allow to obtain oxyalkylates in the process with involvement of the DMC catalyst in a manner to simultaneously keep a low unsaturation level and to produce the low molecular weight oxyalkylates without double bonds in quantities corresponding to the unsaturation level in oxyalkylates produced with KOH catalyst. Herein, the term "low molecular weight" denotes primarily a functionality lower than the nominal functionality of the oxyalkylate. The chain length itself is less important than the low functionality of such oxyalkylates.

The basic teachings for the synthesis of oxyalkylates using KOH catalyst are compiled, for example, in the book "Chemistry and Technology of Polyols for Polyurethanes", Michail Ionescu © 2005 Rapra Technology, chapter 4, pages 55-166.

The basic teachings for the synthesis of oxyalkylates using a DMC catalyst are compiled, for example, in the book "Chemistry and Technology of Polyols for Polyurethanes", Michail Ionescu © 2005 Rapra Technology, chapter 5, pages 167-184.

Document EP 2 547 714 B1 (WO2011113792A) describes a method for producing a polyether polyol with a hydroxyl number from 15 to 120, in the presence of a DMC catalyst and with an ethylene oxide content from 73 to 80% in a dosed oxides mixture. Polyol is useful for the production of a flexible polyurethane foam. The method uses the continuous dosing of starter (CAOS) method, wherein it uses each time both a trifunctional loaded starter (Si) and a trifunctional continuously added starter (Sc), so that the products are deprived of low molecular weight oxyalkylates, by what they cannot be used as a substitute for the corresponding KOH catalyst-based polyols. Examples featuring products with 70% EO content are regarded as comparative. Each time, the catalyst described in US 6,696,383 B1 is used.

Document EP 1 382 629 B1 (US 6,835,801 B2) claims an active starter that is the reaction product of two components: a) pre-activated starter + epoxide + DMC and b) at least 2 mol% of the second starter with a lower EW than the first starter. In the process according to our invention it is not necessary to use this type of active starter.

Document EP 3 317 322 B1 claims CAOS method, wherein the dosing of the low molecular weight starter is stopped after dosing 80-95% of the oxides and the dosing of the oxides alone is completed. The mixture contains at least 50% EO. The final polyol is characterised by low content of low and high molecular fractions. The description uses the same functionalities for the initial starter and the CAOS starter. In the context of applicability for flexible foams, the described method is disadvantageous due to the low content of low molecular weight oxyalkylates, which are not formed under the conditions described. Accordingly, it is necessary to introduce amendments to foam formulations.

Document US 6,884,826 B2 describes a process for producing polyols by oxyalkylating a starter with a mixture of propylene oxide and ethylene oxide, wherein the ratio of the two oxides varies during dosing. This method is called progressive capping. According to the description of the method, the activation of the catalyst and the start of dosing are realized by the use of propylene oxide alone. The method is disadvantageous due to the use of ethylene oxide alone at the end of dosing, which may lead to product instability and phase separation. Likewise, the use of pure propylene oxide at the start of dosing is less advantageous than the use of a mixture of propylene oxide with ethylene oxide due to polyol application properties. Another disadvantage of the product obtained by the indicated method is the absence of low molecular weight oxyalkylates, which in turn imposed adjustment of the foam formulations.
A method based on a similar mechanism is described in document US 10,301,419 B2 (EP 3 317 321 A). The method indicated yields a statistical propylene oxide/ethylene oxide copolymer with an EW of 1500 to 3000, containing at least one chain, formed from a starter with an EW of up to 175. A disadvantage of the product produced according to this method is the absence of low molecular weight oxyalkylates and the limited range of initial and final EWs.

Document PL199860 B1 (EP 1 173 498 B1) describes polyols composed of propylene oxide and ethylene oxide, containing 40-95% primary OH groups, more than 25% incorporated ethylene oxide, and a method of their production. The catalyst used in the synthesis of polyols is DMC as described in EP 0 700 949 B1. The process described involves dosing an oxides mixture having a fixed composition. A disadvantage of the products obtained by the method indicated is the absence of low molecular weight oxyalkylates.

The problem to be solved is how to reduce the undesirable olfactory properties associated with unsaturation level without interference in the foam formulations. The aim of the invention is to develop a method for the production of oxyalkylates which simultaneously provides a low level of unsaturation and allows the production of low molecular weight oxyalkylates without double bonds in amounts corresponding to the unsaturation level in oxyalkylates obtained with KOH catalyst.

The invention relates to a method for producing low unsaturation level oxyalkylates, characterised in that it comprises the steps of:
a. preparation of an initial feed containing a first starter and a double metal cyanide type (DMC) catalyst, wherein the initial feed is dried and heated to a reaction temperature from 115 to 145 °C;
b. activation of the DMC catalyst by dosing to the initial feed an alkylene oxide or alkylene oxides mixture in an amount from 5 to 20% by weight of the initial feed;
c. polyaddition of alkylene oxide or alkylene oxides mixture to the first starter in the presence of the activated DMC catalyst, wherein a low molecular weight second starter with a functionality lower than the first starter is simultaneously dosed together with the alkylene oxide or alkylene oxides mixture stream; wherein under the reaction conditions polyaddition of the alkylene oxide or alkylene oxides mixture occurs simultaneously to the first starter from the initial feed and to the low molecular weight second starter;
d. heating the mixture of oxyalkylates at reaction temperature until constant pressure is achieved, and subsequently undergoing degassing process to remove volatiles.

Preferably, the oxyalkylates are polyether polyols.

Preferably, the first starter has a functionality from 3 to 6.

The first starter is preferably selected from the group comprising oxyalkylated glycerol derivatives, oxyalkylated trimethylolpropane derivatives, oxyalkylated pentaerythritol derivatives, oxyalkylated sorbitol derivatives and mixtures thereof.

The alkylene oxide in step b. is preferably selected from ethylene oxide, propylene oxide or a mixture thereof.

Preferably, the low molecular weight second starter has a functionality from 1 to 2.

Preferably, the low molecular weight second starter does not contain double bonds.

Preferably, the molar fraction of the low molecular weight second starter relative to all starters is from 0.04 to 0.5.

The weight proportion of the components of the mixture of ethylene oxide and propylene oxide in step c preferably ranges from 5:95 to 95:5.

Preferably, the weight proportion of the components of the mixture of ethylene oxide and propylene oxide in step c is changed during the dosing process so that the proportion of ethylene oxide in the mixture is gradually increased, wherein the initial proportion of ethylene oxide ranges from 5 to 30% by weight, and the final proportion of ethylene oxide ranges from 50 to 95% by weight.

Moreover, the invention also relates to an oxyalkylate produced by the inventive method that comprises a first oxyalkylate with a functionality from 3 to 6 and low molecular weight second oxyalkylates with a functionality from 1 to 2, not containing double bonds.

The oxyalkylate according to the invention is preferably a polyether polyol.

Preferably, the oxyalkylate has an unsaturation level of less than 0.01 meq/g, preferably less than 0.004 meq/g.

Preferably, real functionality of the oxyalkylate ranges from 2.5 to 6.

Preferably, the molar fraction of the first oxyalkylate is from 0.7 to 0.99 based on the weight of the entire oxyalkylates mixture.

The invention also relates to a use of the inventive oxyalkylate for the production of polyurethanes, polyurethane-ureas, polyureas, hybrid plastics and other plastics with improved olfactory properties.

Moreover, the invention also relates to a polyurethane foam produced by reacting an isocyanate and a polyol, characterised in that the polyol is the inventive oxyalkylate.

Preferably, the foam has a density ranging from 16 to 40 kg/m³, hardness ranging from 0.5 to 6 kPa, and rebound resilience is higher than 30%.

The addition of a low molecular weight starter in the inventive process results in forming a mixture of low molecular weight monols or diols which, during the foaming process, display a behaviour similar to that of low molecular weight monols comprising an allyl moiety, which, however, involves no deterioration of the olfactory properties in the foams. This is due to the lack of double bonds in the structure of the low molecular weight monols and diols obtained. Indeed, the very moieties containing the double bonds are responsible for the smell. At the same time, however, said low molecular weight monols and diols react with isocyanates during foam formation just as the unsaturation level in oxyalkylates produced with KOH catalyst.

The invention allows for using the produced oxyalkylates in foam formulations interchangeably with KOH catalyst-based oxyalkylates, while reducing the undesirable olfactory properties associated with unsaturation level. The invention combines favourable features of two technologies known in the art. On the one hand, the use of a DMC catalyst achieves a low level of emissions from polyol and foam due to low unsaturation level. On the other hand, the use of the inventive method achieves low molecular weight oxyalkylates with low functionalities, normally present in products obtained using KOH catalyst technology. This allows for using the oxyalkylate produced according to the invention directly in foam formulations adapted for oxyalkylates produced using KOH catalyst. Moreover, since the application is compatible, these two types of oxyalkylates may be used interchangeably and mixed together at any desired ratio without it being necessary to modify the foam formulations depending on the proportion of the components in the mixture.

The use of a double metal cyanide type (DMC) catalyst implies specific preparation and synthesis conditions. Depending on the type of DMC used, the conditions may vary slightly, in principle, however, the procedure is similar. The initial feed containing the starter and catalyst is dried and heated to reaction temperature. The reaction temperature depends on the catalyst used, but it usually ranges from 115 to 145°C. The purpose of the drying step is to remove trace water present in the initial feed. Generally, the amounts of water present in the starter are trace amounts, so that the drying step does not need to take long, often, it is enough for the drying to take place only during the process of heating to the reaction temperature, and the drying step may sometimes not be included. This is not recommended, however, since during drying oxygen is simultaneously being removed from the reaction environment, an element which is undesirable due to the risk of an explosive atmosphere being generated in the later stages. On the other hand, in the case of larger than trace amounts of water in the initial feed, the duration of the drying stage should be increased. An experienced operator can readily select the time and parameters of the drying stage depending on the water content of the initial feed. Important parameters of the drying stage, apart from time and temperature, are pressure and nitrogen flow. Atmospheric pressure or vacuum (pressure lower than atmospheric) is mostly used, while the flow of the inert gas, usually nitrogen sparge, is selected based on the size of the initial feed and other parameters.

A well-known characteristic of DMC type catalysts is the need to activate these catalysts before the proper polyaddition step. The activation is performed by dosing to the initial feed an alkylene oxide or alkylene oxides mixture in an amount of 5 to 20% by weight of the initial feed. In technological practice, usually after having completed heating up to reaction temperature, the amount of alkylene oxide as above is dosed in several portions, each time waiting for activation after dosing a portion. A mixture of alkylene oxides of the same composition, as is intended to be fed in the main oxyalkylation step, can be used, but a mixture with a different oxide composition or a single alkylene oxide can be used just as well. The time needed for activation of the DMC catalyst, as well as the amount of alkylene oxide needed for activation, primarily depend on the type of catalyst used, and on the process parameters, such as temperature, pressure, trace water content in the system, stirring intensity, etc. The activation of the catalyst is also indicated with varying intensity by changing the process parameters. Regardless of the different intensities, the common feature that allows the activation of the DMC catalyst to be clearly identified are a significant pressure drop (indicating intensive consumption of alkylene oxide in the reaction), and the release of heat, which is usually marked by an increase in temperature and by the response of the temperature control system consisting in switching to cooling mode. Persons familiar with the process can readily determine that the catalyst has been activated.

The main step in the process for producing oxyalkylates by the inventive method is the polyaddition of an alkylene oxide or mixture of alkylene oxides to the first starter, in the presence of an activated DMC catalyst, wherein a low molecular weight second starter with a lower functionality than the first starter is simultaneously dosed together with the stream of the alkylene oxide or mixture thereof. Under the reaction conditions, polyaddition of alkylene oxide or a mixture thereof takes place simultaneously to the first starter from the initial feed and to the low molecular weight second starter. Due to the limitations of the DMC catalyst, it is impossible to use a second starter as a component of the initial feed, which means it is dosed simultaneously with alkylene oxide or a mixture thereof. Feeding a large amount of the second starter to the initial feed would contaminate the catalyst, while the use of the CAOS technique allows for obtaining low molecular weight oxyalkylates with a functionality lower than that of the first starter. The main component of the product obtained, in turn, are oxyalkylates derived from the first starter. Dosing rates of alkylene oxide or mixtures thereof, as well as those of the second starter should be selected depending on the catalyst used, taking into account its quantity, composition of the mixture of alkylene oxides, acceptable pressure, etc. Due to the high activity of the DMC catalysts, the pressures in the reactor are generally lower than during similar syntheses using KOH catalyst. The dosing rate, in turn, should each time be appropriately selected by the operator taking into account the parameters as above.

Once the dosing is over, the oxyalkylate mixture is heated at the reaction temperature until constant pressure is achieved. This process is often referred to as cookdown or post-reaction. Due to the high activity of DMC catalysts, cookdown times are generally shorter than during similar syntheses using KOH catalyst. The product is then degassed in order to remove volatile compounds from the oxyalkylates obtained. Volatile compounds are trace amounts of unreacted alkylene oxide or mixtures thereof, and reaction byproducts such as dioxins, also present in trace amounts. The procedure for the removal of volatile organic compounds is the same as the one for drying the initial feed as described above. An elevated temperature, usually similar to the reaction temperature, a reduced pressure, and inert gas purge are used.

Since the oxyalkylates obtained by the inventive method are to be used for the production of foams, the favourable range of functionality of the first (primary) starter ranges from 2.5 to 6. Oxyalkylates from this range of functionality are widely used in technological practice for the production of polyurethane foams. Therefore, the first starter should be selected from the group comprising oxyalkylated glycerol derivatives, oxyalkylated trimethylolpropane derivatives, oxyalkylated pentaerythritol derivatives, oxyalkylated sorbitol derivatives and mixtures thereof. The above list is by no means exhaustive, and those skilled in the art will be well aware that other types of starters may be used without departing from the scope of the invention.

The DMC catalyst used is usually prepared by reacting a metal salt solution with a metal cyanide salt solution in the presence of at least one organic complexing ligand. Detailed methods for obtaining various types of DMC catalysts are extensively described in scientific and patent literature. DMC catalysts are also available commercially. The catalyst itself does not limit the present invention, since, without departing from the scope of the invention, virtually any DMC catalyst that enables polymerisation of alkylene oxides known in the art can be used. Examples of the preparation of highly active DMC catalysts are described in publications such as PL 398518 A1, EP 0 700 949 A2, EP 0 743 093 A1, EP 761 708 A2, WO 97/40086 A1, WO 98/16310 A1 and WO 00/47649 A1.

The low molecular weight second starter used is behind the formation of low molecular weight oxyalkylates in the final product, having a functionality lower than the primary product obtained with the first starter. Taking into account the functionality of the first starter, which preferably ranges from 2.5 to 6, the second starter should have a functionality of 1 to 2. In other words, it should be a monol or a diol, or a mixture of both. Moreover, in order to achieve the effect of reduced emissions from the product and foam, the second starter should not contain double bonds. Low molecular weight starters that are simple chemical compounds are the most preferable when it comes to technology and economy. Therefore, the second starter should preferably be selected from the group comprising C₁₋₄ alkanol, water, propylene glycol, ethylene glycol and mixtures thereof. Persons skilled in the art will be well aware that any low molecular weight diol, such as propylene glycol or ethylene glycol, can be used instead of water, since during synthesis involving water, the corresponding glycols are formed in situ, or, in other words, water is the precursor of such glycols. Economically speaking, water, in turn, is the most preferable second starter.

The invention is illustrated by the examples that follow. The following materials were used in the examples:
Polyol 1: a glycerine-based polyoxypropylene triol (with a nominal functionality of 3) with a molecular weight of about 560 Da, commercially available under the name Rokopol G500, obtained from PCC Rokita SA.
Polyol 2: a glycerine-based polyoxypropylene triol (with a nominal functionality of 3) with a molecular weight of about 1010 Da, commercially available under the name of Rokopol EP8555.01, obtained from PCC Rokita SA.
Polyol 3: a sorbitol-based polyoxypropylene hexol (with a nominal functionality of 6) with a molecular weight of about 2000 Da, commercially available under the name Rokopol RF2000, obtained from PCC Rokita SA.
   50% potassium hydroxide solution: aqueous solution of potassium hydroxide commercially available and obtained from Spolchemie.
Polyol 4: a glycerine-based polyoxypropylene triol (with a nominal functionality of 3) with a molecular weight of about 3500 Da, commercially available under the name Rokopol F3600.

DMC catalyst: A double metal cyanide catalyst obtained by reacting an aqueous metal salt solution with an aqueous metal cyanide salt solution in the presence of two organic complexing ligands, commercially available under the name MEO-DMC and obtained from Mexeo.

Propylene oxide: 1,2-epoxypropane with a minimum purity of 99.97% (GC), max. water content of 0.02% (w/w), commercially available and obtained from PCC Rokita SA. Ethylene oxide: oxirane with min. purity of 99.9%, max. water content of 0.01% (w/w), commercially available and obtained from Orlen.

Water: demineralised water with conductivity below 5 µS/cm at room temperature. n-Butanol: n-butyl alcohol with min. purity of 99.8% and max. water content of 0.05% commercially available and obtained from Grupa Azoty.

TDI 80: a mixture of 80% toluene-2,4-diisocyanate and 20% toluene-2,6-diisocyanate, commercially available and obtained from Borsodchem.

Foam additives: Niax A-1, Niax A-33 are commercially available raw materials obtained from Momentive. These are aliphatic amines which catalyse the reaction of isocyanates with alcohols.

Niax L-620 foam additive is a commercially available raw material obtained from Momentive. Chemically speaking, it is a silicone surfactant.

Kosmos 29, tin octenate is a commercial raw material, available and obtained from Evonik. It is an organometallic catalyst for reacting isocyanates with alcohols.

All of the above materials were used in the available form, without further processing. The molecular weight was determined by calculation, taking into account the determined hydroxyl number (determined according to ASTM D4274-16 met. D) and gel permeation chromatography (GPC) elugram.

The unsaturation level was determined according to ASTM D4671-18 met. A.

The real functionality and the molar fractions of the components are calculated based on the determined unsaturation level and on the quantitative composition of the starters used.

The density of the foams was determined according to method ISO 845.

The rising time and settling of the foams were determined using the Foamat foaming module. The hardness of the foams was determined using a Zwick / Roel Z010 device according to ISO3386-1.

The rebound resilience of the foams was determined using the Ball Rebound method according to ISO 8307.

Permanent deformation is determined according to ISO 1856 method A.

### Comparative Example P1 (not using the inventive method - synthesis of Standard type polyol with KOH catalyst).

A steel pressure reactor equipped with a mechanical stirrer and temperature control was fed with 500 g Polyol 1, and 16 g 50% potassium hydroxide solution. The initial feed was heated to 120 °C and dehydrated under vacuum with nitrogen sparge for 120 minutes. A mixture of 2,400 g of propylene oxide and 360 g of ethylene oxide was then dosed at a rate selected so that the pressure in the reactor does not exceed 0.5 MPa, maintaining a temperature of 120 °C using a temperature control system. The product was cooked down at a temperature of 120 °C for 180 minutes until constant pressure, followed by removal of the volatile organic compounds using nitrogen sparge under vacuum.

Polyoxyalkylene triol was obtained with a molecular weight of 3600 Da, an unsaturation level of 0.05 meq/g and a real functionality of 2.69. The molar fraction of the primary product with functionality of 3 is 0.847 and the molar fraction of the low molecular products (unsaturation level) with functionality of 1 is 0.153.

### Comparative Example P2 (not using the inventive method - synthesis of Standard type polyol with DMC catalyst without modification)

A steel pressure reactor equipped with a mechanical stirrer and temperature control was fed with 500 g Polyol 1 and 0.16g DMC catalyst. The initial feed was heated to 120 °C and dehydrated under vacuum with nitrogen sparge for 60 minutes. The catalyst was activated by dosing 50 g of propylene oxide and cooking down at 135 °C for 40 minutes, followed by a marked pressure drop. A mixture of 2350 g of propylene oxide and 360 g of ethylene oxide was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum. Polyoxyalkylene triol was obtained with a molecular weight of 3600 Da, an unsaturation level of 0.001 meq/g and a real functionality of 2.99. The molar fraction of the primary product with functionality of 3 is 0.996 and the molar fraction of the low molecular products (unsaturation level) with functionality of 1 is 0.004.

### Comparative Example P3 (not using the inventive method - synthesis of Soft type polyol with KOH catalyst)

A steel pressure reactor equipped with a mechanical stirrer and temperature control was fed with 600 g Polyol 2, and 11 g 50% potassium hydroxide solution. The initial feed was heated to 120 °C and dehydrated under vacuum with nitrogen sparge for 120 minutes. A mixture of 630 g of propylene oxide and 1470 g of ethylene oxide was then dosed at a rate selected so that the pressure in the reactor does not exceed 0.5 MPa, maintaining a temperature of 125°C using a temperature control system. The product was cooked down at a temperature of 125°C for 60 minutes until constant pressure, followed by removal of the volatile organic compounds using nitrogen sparge under vacuum.

Polyoxyalkylene triol was obtained with a molecular weight of 4500 Da, an unsaturation level of 0.012 meq/g and a real functionality of 2.90. The molar fraction of the primary product with functionality of 3 is 0.949 and the molar fraction of the low molecular products (unsaturation level) with functionality of 1 is 0.051.

### Comparative Example P4 (not using the inventive method - synthesis of Soft type polyol with DMC catalyst without modification)

A steel pressure reactor equipped with a mechanical stirrer and temperature control was fed with 600 g Polyol 2 and 0.14 g DMC catalyst. The initial feed was heated to 120 °C and dehydrated under vacuum with nitrogen sparge for 60 minutes. The catalyst was activated by dosing a mixture of 18 g of propylene oxide and 42 g of ethylene oxide and cooking down at 135 °C for 40 minutes, followed by a marked pressure drop. A mixture of 612 g of propylene oxide and 1428 g of ethylene oxide was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum.

Polyoxyalkylene triol was obtained with a molecular weight of 4500 Da, an unsaturation level of 0.001 meq/g and a real functionality of 2.99. The molar fraction of the primary product with functionality of 3 is 0.996 and the molar fraction of the low molecular products (unsaturation level) with functionality of 1 is 0.004.

### Example W5 of synthesis of a Standard type polyol according to the invention (functionality of 3 reduced by dosing water)

A steel pressure reactor equipped with a mechanical stirrer and temperature control was fed with 500 g Polyol 1 and 0.17 g DMC catalyst. The initial feed was heated to 135°C and dehydrated under vacuum with nitrogen sparge for 60 minutes. The catalyst was activated by dosing 50 g of propylene oxide and cooking down at 135 °C for 40 minutes, followed by a marked pressure drop. A mixture of 2580 g of propylene oxide and 387 g of ethylene oxide and 1920 mg water was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum.

Polyoxyalkylene triol was obtained with a molecular weight of 3600 Da, an unsaturation level of 0.001 meq/g and a real functionality of 2.84. The molar fraction of the primary product with functionality of 3 is 0.845, the molar fraction of the oxyalkylates obtained with the low molecular weight starter with functionality 2 is 0.151, and the molar fraction of the low molecular products (unsaturation level) with functionality of 1 is 0.003.

### Example W6 of synthesis of a Standard type polyol according to the invention (functionality of 3 reduced by dosing n-butanol)

A steel pressure reactor equipped with a mechanical stirrer and temperature control was fed with 500 g Polyol 1 and 0.17 g DMC catalyst. The initial feed was heated to 135°C and dehydrated under vacuum with nitrogen sparge for 60 minutes. The catalyst was activated by dosing 50 g of propylene oxide and cooking down at 135 °C for 40 minutes, followed by a marked pressure drop. A mixture of 2470 g of propylene oxide and 370 g of ethylene oxide and 7900 mg n-butanol was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum.

Polyoxyalkylene triol was obtained with a molecular weight of 3600 Da, an unsaturation level of 0.001 meq/g and a real functionality of 2.69. The molar fraction of the primary product with functionality of 3 is 0.845, the molar fraction of the oxyalkylates obtained with the low molecular weight starter with functionality 1 is 0.151, and the molar fraction of the low molecular products (unsaturation level) with functionality of 1 is 0.003.

### Example W7 of synthesis of a Soft type polyol according to the invention (functionality of 3 reduced by dosing water)

A steel pressure reactor equipped with a mechanical stirrer and temperature control was fed with 600 g Polyol 2 and 0.14 g DMC catalyst. The initial feed was heated to 135°C and dehydrated under vacuum with nitrogen sparge for 60 minutes. The catalyst was activated by dosing a mixture of 20 g of propylene oxide and 47 g of ethylene oxide and cooking down at 135 °C for 40 minutes, followed by a marked pressure drop. A mixture of 630 g of propylene oxide and 1470 g of ethylene oxide and 680 mg water was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum.

Polyoxyalkylene triol was obtained with a molecular weight of 4500 Da, an unsaturation level of 0.001 meq/g and a real functionality of 2.90. The molar fraction of the primary product with functionality of 3 is 0.909, the molar fraction of the oxyalkylates obtained with the low molecular weight starter with functionality 2 is 0.087, and the molar fraction of the low molecular products (unsaturation level) with functionality of 1 is 0.004.

### Example W8 of synthesis according to the invention (functionality of 6 reduced by dosing water)

A steel pressure reactor equipped with a mechanical stirrer and temperature control was fed with 600 g Polyol 3 and 0.20 g DMC catalyst. The initial feed was heated to 135°C and dehydrated under vacuum with nitrogen sparge for 60 minutes. The catalyst was activated by dosing a mixture of 20 g of propylene oxide and 47 g of ethylene oxide and cooking down at 135 °C for 40 minutes, followed by a marked pressure drop. A mixture of 950 g of propylene oxide and 2217 g of ethylene oxide and 640 mg water was then dosed at a rate selected so that the pressure in the reactor does not exceed 0.4 MPa, maintaining a temperature of 135°C using a temperature control system. The product was cooked down at a temperature of 135°C for 30 minutes until constant pressure, followed by removal of the volatile organic compounds using nitrogen sparge under vacuum.

Polyoxyalkylene triol was obtained with a molecular weight of 12000 Da, an unsaturation level of 0.002 meq/g and a real functionality of 4.80. The molar fraction of the primary product with functionality of 6 is 0.727, the molar fraction of the oxyalkylates obtained with the low molecular weight starter with functionality 2 is 0.253, and the molar fraction of the low molecular products (unsaturation level) with functionality of 1 is 0.020.

### Comparative Example P9 (of using KOH-based polyol - base formulation of standard foam)

A mixture containing 100 parts of polyol obtained according to Comparative Example P1, 4.1 parts of water, 0.03 parts of Niax A-1 catalyst, 0.09 parts of Niax A-33 catalyst, 0.9 parts of Niax L-620 surfactant, 0.21 parts of Kosmos 29 catalyst, and 51.32 parts of TDI 80 (a mixture of 80% toluene-2,4-diisocyanate and 20% toluene-2,6-diisocyanate) was poured into an open mold with a base of 20 x 20 cm. The index of the formulation was 109.

A free rise foam was obtained with a density of 24 kg/m³, rising time 98 s, relapse 1.2%, shrinkage 1.6%, CV40 hardness 3.8 kPa, rebound resilience 43%, permanent deformation 50%: 3.2%.

### Comparative Example P10 (of using DMC-based polyol according to the same standard foam base formulation)

The procedure from Comparative Example P9 was followed, but the polyol obtained according to Comparative Example P2 was used instead of the polyol obtained according to Comparative Example P1.

A free rise foam was obtained with a density of 27 kg/m³, rising time 89 s, relapse 0.2%, shrinkage 4.6%, CV40 hardness 4.2 kPa, rebound resilience 34%, permanent deformation 50%: 5.7%. The mechanical properties of the foam obtained are inferior relative to those of the foam in Comparative Example P9 due to excessive reactivity and closed cell structure resulting therefrom.

### Example W11 of using a polyol made according to the invention (according to the same standard foam base formulation)

The procedure from Comparative Example P9 was followed, but the polyol obtained in Example W5 according to the invention was used instead of the polyol obtained according to Comparative Example P1.

A free rise foam was obtained with a density of 254.6 kg/m³, rising time 94 s, relapse 0.9%, shrinkage 1.3%, CV40 hardness 3.8 kPa, rebound resilience 44%, permanent deformation 50%: 2.6%. The olfactory properties of the foam are superior relative to those of the foam in Comparative Example P9.

### Comparative Example P12 (of using KOH-based polyol - base formulation of hyper soft foam)

A mixture containing 75 parts of polyol obtained according to Comparative Example P3, 25 parts of Polyol 5, 3.2 parts of water, 0.32 parts of Niax A-33 catalyst, 1.2 parts of Niax L-620 surfactant, 0.03 parts of Kosmos 29 catalyst, and 36.7 parts of TDI 80 (a mixture of 80% toluene-2,4-diisocyanate and 20% toluene-2,6-diisocyanate) was poured into an open mold with a base of 20 x 20 cm. The index of the formulation was 100.

A free rise foam was obtained with a density of 30.1 kg/m³, rising time 135 s, relapse 1.2%, shrinkage 2.3%, CV40 hardness 1.1 kPa, rebound resilience 45%, permanent deformation 50%: 4.6%.

### Comparative Example P13 (of using DMC-based polyol according to the same hyper soft foam base formulation)

The procedure from Comparative Example P12 was followed, but the polyol obtained in Comparative Example P4 was used instead of the polyol obtained according to Comparative Example P3.

A free rise foam was obtained with a density of 35.2 kg/m³, rising time 124 s, relapse 1.1%, shrinkage 5.3%, CV40 hardness 1.6 kPa, rebound resilience 32%, permanent deformation 50%: 9.6%. Mechanical performance of the foam is inferior relative to that of the foam of Comparative Example P12 due to the closed cell structure.

### Example W14 of using a polyol made according to the invention (according to the same hyper soft foam base formulation)

The procedure from Comparative Example P12 was followed, but the polyol obtained in Example W7 according to the invention was used instead of the polyol obtained according to Comparative Example P3.

A free rise foam was obtained with a density of 29.9 kg/m³, rising time 131 s, relapse 1.0 %, shrinkage 1.9%, CV40 hardness 1.2 kPa, rebound resilience 45%, permanent deformation 50%: 3.6%. The olfactory properties of the foam are superior relative to those of the foam in Comparative Example P12.

## Claims

1. A method for producing low unsaturation level oxyalkylates, **characterised in that** it comprises the steps of:
a. preparation of an initial feed containing the first starter and a double metal cyanide type (DMC) catalyst, wherein the initial feed is dried and heated to a reaction temperature from 115 to 145 °C;
b. activation of the DMC catalyst by dosing to the initial feed an alkylene oxide or alkylene oxides mixture in an amount from 5 to 20% by weight of the initial feed;
c. polyaddition of alkylene oxide or alkylene oxides mixture to a first starter in the presence of the activated DMC catalyst, wherein a low molecular weight second starter with a functionality lower than the first starter is simultaneously dosed together with the alkylene oxide or alkylene oxides mixture stream; wherein under the reaction conditions the polyaddition of the alkylene oxide or alkylene oxides mixture occurs simultaneously to the first starter from the initial feed and to the low molecular weight second starter;
d. heating the mixture of oxyalkylates at reaction temperature until constant pressure is achieved, and subsequently conducting the degassing process to remove volatiles.

2. The method for producing oxyalkylates according to claim 1, **characterised in that** the oxyalkylates are polyether polyols.

3. The method for producing oxyalkylates according to claim 1 or 2, **characterised in that** the first starter has a functionality from 3 to 6.

4. The method for producing oxyalkylates according to any one of claims 1-3, **characterised in that** the first starter is selected from the group comprising oxyalkylated glycerol derivatives, oxyalkylated trimethylolpropane derivatives, oxyalkylated pentaerythritol derivatives, oxyalkylated sorbitol derivatives and mixtures thereof.

5. The method for producing oxyalkylates according to any one of claims 1-4, **characterised in that** the alkylene oxide in step b. is selected from ethylene oxide, propylene oxide or a mixture thereof.

6. The method for producing oxyalkylates according to any one of claims 1-5, **characterised in that** the low molecular weight second starter has a functionality from 1 to 2.

7. The method for producing oxyalkylates according to any one of claims 1-6, **characterised in that** the low molecular weight second starter does not contain double bonds.

8. The method for producing oxyalkylates according to any one of claims 1-7, **characterised in that** the mole fraction of the low molecular weight second starter relative to all starters is from 0.04 to 0.5.

9. The method for producing oxyalkylates according to any one of claims 1-8, **characterised in that** the weight proportion of the components of the mixture of ethylene oxide and propylene oxide in step c ranges from 5:95 to 95:5.

10. The method for producing oxyalkylates according to any one of claims 1-9, **characterised in that** the weight proportion of the components of the mixture of ethylene oxide and propylene oxide in step c is changed during the dosing process so that the proportion of ethylene oxide in the mixture is gradually increased, wherein the initial proportion of ethylene oxide ranges from 5 to 30% by weight, and the final proportion of ethylene oxide ranges from 50 to 95% by weight.

11. An oxyalkylate produced by the method as defined in any one of claims 1-10, comprising a first oxyalkylate with a functionality from 3 to 6 and low molecular weight second oxyalkylates with a functionality from 1 to 2, not containing double bonds.

12. The oxyalkylate according to claim 11, **characterised in that** it is a polyether polyol.

13. The oxyalkylate according to claim 11 or 12, **characterised in that** its unsaturation level is less than 0.01 meq/g, preferably less than 0.004 meq/g.

14. The oxyalkylate according to any one of claims 11-13, **characterised in that** its real functionality ranges from 2.5 to 6.

15. The oxyalkylate according to any one of claims 11-14, **characterised in that** the molar fraction of the first oxyalkylate is from 0.7 to 0.99 based on the weight of the entire oxyalkylates mixture.

16. A use of an oxyalkylate as defined in any one of claims 11-15 for the production of polyurethanes, polyurethane-ureas, polyureas, hybrid plastics and other plastics with improved olfactory properties.

17. A polyurethane foam produced by reacting an isocyanate and a polyol, **characterised in that** the polyol is the oxyalkylate as defined in any one of claims 11-15.

18. The foam according to claim 17, **characterized in that** its density ranges from 16 to 40 kg/m³, hardness ranges from 0.5 to 6 kPa, and rebound resilience is higher than 30%.
